# FASCICULE DE BREVET EUROPEEN

(11) **EP 0 334 700 B1**
(45) Date de publication et mention de la délivrance du brevet: **10.02.1993**
(21) Numéro de dépôt: 89400597.4
(22) Date de dépôt: 03.03.1989
(51) Int. Cl.: B65D 77/20

(54) **Procédé permettant la fermeture puis l'ouverture de récipients stérilisables, opercules permettant la mise en oeuvre dudit procédé et procédé de fabrication desdits opercules**
Verfahren zum Verschliessen, und darauf Oeffnen von sterilisierbaren Behältern , Deckel zur Durchführung dieses Verfahrens und Herstellungsverfahren dieser Deckel
Method of closing and subsequently opening sterilizable container lids forthe execution of said method and method of producing said lids

(30) Priorité: 04.03.1988 FR 8802774
(43) Date de publication de la demande: 27.09.1989
(73) Titulaire: SOCIETE ALSACIENNE D'ALUMINIUM Société Anonyme, F-74160 Saint Julien en Genevois (FR)
(72) Inventeur: Boiron, Guy François Valéry, F-68920 Wintzenheim (FR); Kretz, Laurent, F-67600 Selestat (FR)
(74) Mandataire: Hasenrader, Hubert

(56) Documents cités:
- EP-A- 0 160 975
- EP-A- 0 207 626
- GB-A- 1 536 428
- GB-A- 1 589 923

## Description

La présente invention concerne un procédé permettant la fermeture puis l'ouverture de récipients stérilisables, les opercules permettant la mise en oeuvre dudit procédé et un procédé de fabrication desdits opercules.

Pour emballer et conserver des aliments, on utilise de plus en plus des récipients stérilisables hermétiquement fermés au moyen d'opercules ; on utilise également des sachets formés de deux parois de même nature, chaque paroi pouvant être, dans le cadre de la présente invention, assimilée à un opercule. Pour que la fermeture de ces récipients soit parfaitement étanche et sûre dans le temps, il convient d'assurer une "soudure dans la masse" entre le récipient et l'opercule. Cette "soudure dans la masse" impliquant qu'il y ait une véritable fusion et une interpénétration entre les matériaux soudés. Mais une telle soudure présente l'inconvénient de rendre très difficile l'ouverture ultérieure des récipients.

La présente invention vise a résoudre cette difficulté technique en permettant à la fois d'assurer entre un récipient et son opercule une fermeture hermétique par "soudure dans la masse" et une ouverture ultérieure facile.

On a déjà proposé divers dispositifs visant à la résolution de cette difficulté technique. On peut par exemple citer les brevets US 4 673 601 et anglais 1 536 428 dans lesquels on préconise d'assurer la facilité d'ouverture par utilisation d'une liaison de faible résistance entre la couche de matière scellable et la couche voisine et en affaiblissant la résistance de la couche de matière scellable soit en ménageant des lignes de rupture dans ladite couche (US 4 673 601) soit en utilisant des couches scellables très minces (au plus égales à 10 micromètres ; anglais 1 536 428). On peut citer également le brevet anglais 1 589 923 dans lequel on préconise une ouverture d'un récipient thermoscellé par arrachement d'une partie du couvercle situé hors de la surface de scellement. On peut enfin citer : le brevet européen 0 207 626 dans lequel on préconise pour l'ouverture d'un récipient thermosoudé un pelage de l'opercule, celui-ci comportant une couche superficielle en copolymère propylène anhydride maléique (couche dont on sait qu'elle possède des propriétés adhésives) que l'on fait adhérer sur une barquette dont la couche superficielle est constituée d'un mélange chargé de deux polypropylènes.

Ce dernier brevet constitue l'art antérieur le plus proche de la présente invention puisque la présente invention est basée sur la constatation que, en admettant dans une couche de polyoléfine une charge convenable, il est possible de conserver à cette couche des propriétés permettant une "soudure dans la masse" avec une couche adjacente formée d'une polyoléfine de même nature et de réaliser, lors d'une traction convenable sur l'opercule, une ouverture facile du récipient par rupture interne de la couche de polyoléfine chargée.

La présente invention concerne donc un procédé pour la fermeture et la réouverture aisée d'un récipient stérilisable en matière thermoplastique, par utilisation d'un opercule comprenant une couche extérieure, une couche liante et une couche intérieure, susceptible d'être fixé hermétiquement sur le rebord dudit récipient et d'être enlevé par pelage en exerçant une traction de pelage sur le bord extérieur de l'opercule, l'une des couches intérieures de l'opercule ou du récipient comportant une charge inerte, caractérisé en ce qu'on utilise un récipient et un opercule présentant au voisinage immédiat de la zone de scellement les mêmes matériaux choisis parmi le polyéthylène haute densité, le polypropylène et le polyester, chacun desdits matériaux formant au moins une couche d'épaisseur comprise entre 20 et 100 micromètres, en ce que l'on réunit par thermoscellement lesdites couches intérieures du récipient et de l'opercule de manière à réaliser une "soudure dans la masse" dans la zone du rebord du récipient, et en ce que la charge inerte représente 15 à 50 % en poids de la couche chargée.

La présente invention concerne également un opercule pelable pour la fermeture hermétique d'un récipient stérilisable en matière thermoplastique, destiné à être utilisé dans le procédé précédent et présentant une couche extérieure, une couche liante et une couche intérieure, caractérisé en ce que cette couche intérieure a une épaisseur comprise entre 20 et 100 micromètres et comprend un matériau de base qui est le même que celui composant la couche adjacente du rebord dudit récipient, est choisi parmi les polyéthylène haute densité, polypropylène et polyester, et contient une charge inerte de 15 à 50 % en poids du matériau de base.

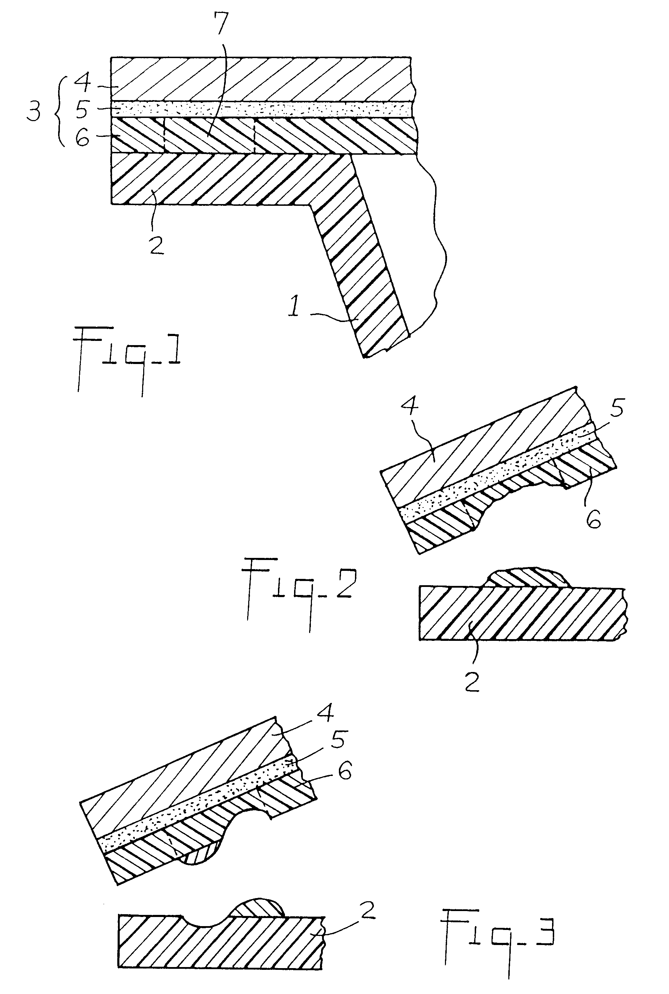

Le principe du procédé est représenté sur les figures 1, 2 et 3. Sur la figure 1 on a représenté :
- en 1 la paroi du récipient ; cette paroi se termine sur son pourtour supérieur, par un bord plat horizontal 2,
- en 3 un opercule formé de plusieurs couches de matériaux 4, 5 et 6,
- le scellement de l'opercule sur le bord horizontal du récipient s'effectue par une "soudure dans la masse" en 7 du matériau inférieur 6 de l'opercule avec le matériau formant le bord 2 du récipient ; ces deux matériaux sont de même nature, par exemple ils sont tous les deux du polypropylène. Ce scellement s'effectue, comme connu pour d'autres emballages, sur une bande de largeur adéquate, le bord externe de ladite bande étant situé à une certaine distance du bord de l'opercule pour permettre la préhension de celui-ci et donc l'ouverture du contenant. Sur les figures, cette zone de scellement a été matérialisée par deux lignes discontinues.

Supposons que le matériau inférieur 6 de l'opercule ait reçu une charge convenable ; lorsque l'on voudra ouvrir le récipient en exercant une traction verticale sur le bord extérieur de l'opercule le matériau 6 va subir une rupture interne et l'on obtiendra une séparation représentée sur la figure 2 où l'on voit qu'une partie du matériau inférieur 6 est restée solidaire de l'opercule alors qu'une autre partie est restée solidaire du bord du récipient.

Supposons que le bord du récipient 2 et le matériau inférieur de l'opercule aient reçus l'un et l'autre une charge convenable ; en exercant une traction verticale sur le bord extérieur de l'opercule, les deux matériaux chargés seront susceptibles de subir une rupture interne, une partie du matériau 2 restant solidaire de l'opercule et une partie du matériau 6 restant solidaire du récipient. C'est ce qui est schématisé sur la figure 3.

Par "récipient" dans la présente demande on entend tout contenant tel que bouteilles, pots ou barquettes ou feuilles formant sachet (avec une feuille identique ou proche formant opercule) ; le matériau constituant ledit récipient doit être résistant à la stérilisation et doit pouvoir subir sans détérioration des réchauffages dans l'eau bouillante. Ledit matériau est le plus souvent constitué par un matériau plastique multicouche thermoformable ; on notera que la couche supérieure (celle qui est en regard avec l'opercule) est constituée en totalité ou en partie (c'est-à-dire sur les bords du récipient) d'un matériau de même nature que celui formant la couche inférieure de l'opercule.

Par "charge" que doit comporter au moins un des matériaux participant au scellement on entend tout matériau pulvérulent inerte vis-à-vis de la matière plastique dans laquelle ladite charge est incluse. Ces charges sont par exemple des charges minérales (carbonate de calcium ou talc) ou des pigments.

Il est préférable que la granulométrie moyenne de ladite charge ne soit pas trop grosse : elle est par exemple comprise entre 0,5 et 50 micromètres. On a indiqué que la quantité de charge pouvait représenter de 15 à 50 % en poids par rapport au matériau dans lequel elle est incluse ; si la proportion de charge est inférieure à 15 % environ, le matériau contenant la charge ne sera pas suffisamment fragilisé pour subir une rupture interne lors de la traction sur l'opercule ; si la proportion de charge est supérieure à 50 % environ, le matériau perdra certaines de ses propriétés physiques, il ne pourra pas être extrudé ni soudé dans de bonnes conditions.

Le meilleur mode de mise en oeuvre de l'invention consiste à prévoir que la charge est incluse dans la couche inférieure de l'opercule. C'est pourquoi la présente invention concerne également cet opercule et la manière de l'obtenir.

Ledit opercule est formé en principe, comme représenté sur la figure 1, de trois couches 4, 5 et 6.

La couche 4 est la couche extérieure ; une telle couche est par exemple formée d'une feuille d'aluminium dont l'épaisseur est de l'ordre de 20 à 200 micromètres ; l'avantage d'une telle feuille d'aluminium est qu'elle résiste bien aux températures de stérilisation et de réchauffage, qu'elle forme une barrière efficace contre les gaz et les arômes et qu'elle présente une excellente aptitude à la décoration. De plus, l'aluminium étant bon conducteur, le thermoscellage de l'opercule s'opérera rapidement et dans de bonnes conditions.

La couche 5 est une couche liante destinée à constituer un lien solide entre la couche 4 et la couche 6. Cette couche sera constituée par un matériau polymère du type polyoléfine, apte à donner naissance à un film, que l'on a modifié par copolymérisation ou greffage de façon à y introduire des fonctions chimiques actives (acides par exemple) lui conférant des propriétés d'accrochage vis-à-vis des couches adjacentes. Cette couche a de préférence une épaisseur de l'ordre de 2 à 20 micromètres.

La couche 6 est une couche de scellement ; elle est constituée, nous l'avons vu, d'un polyéthylène haute densité, d'un polypropylène ou d'un polyester. Elle contient de 15 à 50 % de charge. Son épaisseur, afin d'obtenir une "soudure dans la masse" très solide et sécurisante, est comprise entre 20 et 100 micromètres.

Un tel opercule est selon l'invention obtenu par coextrusion-lamination des films le constituant ; cette technique permet d'assembler les trois couches en une seule opération industrielle ; elle évite l'utilisation d'un primaire d'accrochage ou de multiples couches intermédiaires que l'on rencontre souvent dans les opercules antérieurement utilisés ; elle permet d'éliminer lors de la fabrication toute utilisation de colles et donc de solvants organiques. Ceci élimine les risques de contamination lors des phases successives de fabrication et supprime l'émission et la diffusion de solvants dans les lieux de fabrication et dans l'environnement.

L'exemple non limitatif suivant illustre l'invention :
- on utilise un récipient que l'on thermoforme à partir d'un matériau plastique multicouche dont une des couches extérieures (qui formera la couche interne du récipient et la couche supérieure des bords dudit récipient) est en polypropylène,
- on forme par coextrusion-lamination un opercule (dont les dimensions sont adaptées à celles dudit récipient) constitué par une couche d'aluminium de 100 micromètres d'épaisseur, une couche d'un polypropylène sur lequel on a greffé de l'acide maléique (dont l'épaisseur est de 5 micromètres) et une couche de polypropylène, d'épaisseur 50 micromètres, contenant 20 % d'un carbonate de calcium ayant une granulométrie moyenne de 10 micrométres.

On obtient ainsi un ensemble scellable par soudure dans la masse, résistant (après assemblage) a des cycles de stérilisation à 121°C pendant 1 heure et, ultérieurement, à des réchauffages dans l'eau bouillante pendant 30 min et qui peut être aisément ouvert. Cet ensemble se prête bien à l'utilisation sur les machines de conditionnement car, notamment, l'ouverture ne dépend que très peu des conditions de thermoscellage mais dépend surtout de la composition de la couche contenant la charge.

On doit noter :
- que la réalisation d'une soudure dans la masse de couches relativement épaisse du matériau plastique apporte une sécurité complémentaire si, lors du remplissage des contenants, les bords de ceux-ci sont souillés par le contenu ;
- que d'après les connaissances actuelles, les seuls matériaux thermoplastiques utilisés effectivement sont le polyéthylène haute densité, le polypropylène ou le polyester ; mais on peut normalement penser que d'autres thermoplastiques stérilisables (par exemple un polycarbonate ou un polysulfone) pourraient être également utilisables selon les mêmes principes de soudure dans la masse et d'affaiblissement de la cohésion intérieure par adjonction de charges.

## Revendications

1. Procédé pour la fermeture et la réouverture aisée d'un récipient stérilisable en matière thermoplastique, par utilisation d'un opercule comprenant une couche extérieure (4), une couche liante (5) et une couche intérieure (6), susceptible d'être fixé hermétiquement sur le rebord dudit récipient et d'être enlevé par pelage en exerçant une traction de pelage sur le bord extérieur de l'opercule, l'une des couches intérieures de l'opercule ou du récipient comportant une charge inerte, caractérisé
en ce que l'on utilise un récipient et un opercule présentant au voisinage immédiat de la zone de scellement les mêmes matériaux choisis parmi le polyéthylène haute densité, le polypropylène et le polyester, chacun desdits matériaux formant au moins une couche d'épaisseur comprise entre 20 et 100 micromètres,
en ce que l'on réunit par thermoscellement lesdites couches intérieures du récipient et de l'opercule de manière à réaliser une "soudure dans la masse" dans la zone du rebord (2) du récipient, et en ce que la charge inerte représente 15 à 50 % en poids de la couche chargée.

2. Procédé selon la revendication 1, caractérisé en ce que l'on utilise comme matériau participant à la "soudure dans la masse" un matériau à base de polyester.

3. Procédé selon l'une des revendications 1 et 2, caractérisé en ce que l'on utilise comme charge du carbonate de calcium.

4. Opercule pelable pour la fermeture hermétique d'un récipient stérilisable en matière thermoplastique, destiné à être utilisé dans le procédé selon l'une des revendications 1 à 3 et présentant une couche extérieure (4), une couche liante (5) et une couche intérieure (6), caractérisé en ce que cette couche intérieure (6) a une épaisseur comprise entre 20 et 100 micromètres et comprend un matériau de base qui est le même que celui composant la couche adjacente du rebord (2) dudit récipient, est choisi parmi les polyéthylène haute densité, polypropylène et polyester, et contient une charge inerte de 15 à 50 % en poids du matériau de base.

5. Opercule selon la revendication 4, caractérisé en ce que :
- ladite couche extérieure (4) est une feuille d'aluminium dont l'épaisseur est comprise entre environ 20 et 200 micromètres, et
- ladite couche liante (5) est une couche d'une polyoléfine modifiée par copolymérisation ou greffage de façon à comporter des fonctions chimiques, notamment acides, lui conférant les propriétés d'accrochage vis-à-vis des couches adjacentes (4) et (5).

6. Opercule selon la revendication 4, caractérisé en ce que la granulométrie de la charge est comprise entre 0,5 et 50 micromètres.

7. Opercule selon la revendication 4, caractérisé en ce que la charge inerte est du carbonate de calcium.

## Patentansprüche

1. Verfahren zum leichten Schließen und wieder Öffnen eines sterilisierbaren Behälters aus thermoplastischem Material durch Verwendung eines eine Außenschicht (4), eine Verbindungsschicht (5) und eine Innenschicht (6) umfassenden Deckels, der auf der Randleiste des Behälters hermetisch fixiert und durch Anwenden eines Zugs zur Entfernung am Außenrand des Deckels entfernt werden kann, wobei eine der Innenschichten des Deckels oder des Behälters einen inerten Füllstoff enthält,
dadurch gekennzeichnet, daß
man einen Behälter und einen Deckel verwendet, die in unmittelbarer Nachbarschaft des Umschließungsbereichs aus den gleichen Materialien bestehen, die ausgewählt werden unter Niederdruckpolyethylen (HDPE), Polypropylen und Polyester, wobei aus jedem dieser Materialien mindestens eine Schicht einer Dicke zwischen 20 und 100 µm gebildet ist
und daß diese Innenschichten des Behälters und des Deckels durch Thermoverschweißen so verbunden werden, daß im Bereich der Randleiste (2) des Behälters ein "Verschweißen in der Masse" erreicht wird und daß der inerte Füllstoff 15 bis 50 Masse-% der füllstoffhaltigen Schicht darstellt.

2. Verfahren nach Anspruch 1, dadurch gekennzeichnet, daß man als beim "Verschweißen in der Masse" beteiligtes Material ein Material auf Polyesterbasis verwendet.

3. Verfahren nach einem der Ansprüche 1 und 2, dadurch gekennzeichnet, daß man als Füllstoff Calciumcarbonat verwendet.

4. Abziehbarer Deckel für das hermetische Verschließen eines sterilisierbaren Behälters aus thermoplastischem Material zur Verwendung im Verfahren nach einem der Ansprüche 1 bis 3, der eine Außenschicht (4), eine Verbindungsschicht (5) und eine Innenschicht (6) aufweist,
dadurch gekennzeichnet, daß die Innenschicht (6) eine Dicke zwischen 20 und 100 µm besitzt und ein Basismaterial enthält, das das gleiche ist, wie das der angrenzenden Schicht der Randleiste (2) des Behälters, und das ausgewählt wird unter Niederdruckpolyethylen (HDPE), Polypropylen und Polyester und einen inerten Füllstoff in einer Menge von 15 bis 50 %, bezogen auf die Masse des Basismaterials, enthält.

5. Deckel nach Anspruch 4, dadurch gekennzeichnet, daß:
- die Außenschicht (4) eine Aluminiumfolie mit einer Dicke zwischen ungefähr 20 und 200 µm ist und
- die Verbindungsschicht (5) eine Schicht aus einem durch Copolymerisation oder Pfropfen so modifizierten Polyolefin ist, daß dieses chemische Gruppen, insbesondere saure, aufweist, die ihm Haftungseigenschaften gegenüber den angrenzenden Schichten (4) und (5) verleihen.

6. Deckel nach Anspruch 4, dadurch gekennzeichnet, daß die Teilchengrößen des Füllstoffs im Bereich von 0,5 bis 50 µm liegen.

7. Deckel nach Anspruch 4, dadurch gekennzeichnet, daß der inerte Füllstoff Calciumcarbonat ist.

## Claims

1. Process for the closure and easy re-opening of a sterilizable thermoplastic container by using an opercular cover which comprises an outer layer (4), a bonding layer (5) and an internal layer (6), capable of being hermetically sealed on the edge of said container and of being peeled off by exerting a pulling action on the outer edge of the opercular cover, one of the internal layers of the opercular cover or of the container comprising an inert filler, characterized
in that a container and an opercular cover are used which have at the immediate vicinity of the sealing zone the same materials selected from high density polyethylene, polypropylene and polyester, each of said materials forming at least one layer of thickness comprised between 20 and 100 µm,
in that said internal layers of the container and of the opercular cover are combined by heat-sealing so as to achieve a "deep soldering" in the zone of the edge (2) of the container, and in that the inert filler represents 15 to 50 % by weight of the filled layer.

2. Process according to claim 1, characterized in that the material involved in said "deep soldering" is polyester.

3. Process according to one of claims 1 and 2, characterized in that the filler is calcium carbonate.

4. Peelable opercular cover for the hermetic closure of a sterilizable thermoplastic container designed to be used in the process according to one of claims 1 to 3 and comprising an outer layer (4), a bonding layer (5), and an internal layer (6), characterized in that said internal layer (6) has a thickness ranging between 20 and 100 µm and comprises a same basis material as that constituting the adjacent layer of the edge (2) of said container, is selected from the high density polyethylene, polypropylene and polyester and comprises an inert filler of 15 to 50 % by weight of the basis material.

5. Opercular cover according to claim 4, characterized in that:
- said outer layer (4) is an aluminium foil of thickness ranging between about 20 and 200 µm, and
- said bonding layer (5) is a layer of polyolefin modified by copolymerization or grafting so as to include chemical functions, such as acid functions, giving it adhering properties toward the adjacent layers (4) and (5).

6. Opercular cover according to claim 4, characterized in that the granulometry of the filler ranges between 0.5 and 50 µm.

7. Opercular cover according to claim 4, characterized in that the inert filler is calcium carbonate.
